Europäisches Patentamt

European Patent Office

Office européen des brevets

(11) Veröffentlichungsnummer: **0 504 767 A1**

## EUROPÄISCHE PATENTANMELDUNG

(21) Anmeldenummer: **92104462.4**

(22) Anmeldetag: **16.03.92**

(51) Int. Cl.⁵: **B60J 5/06**, B62D 31/00

(30) Priorität: **18.03.91 CH 820/91**

(43) Veröffentlichungstag der Anmeldung:
**23.09.92 Patentblatt 92/39**

(84) Benannte Vertragsstaaten:
**CH DE FR LI**

(71) Anmelder: **Horlacher, Max**
**Güterstrasse 9**
**CH-4313 Möhlin(CH)**

(72) Erfinder: **Horlacher, Max**
**Güterstrasse 9**
**CH-4313 Möhlin(CH)**

(54) **Leichtbaufahrzeugkabine.**

(57) Eine Leichtbaufahrzeugkabine aus faserverstärktem Kunststoff weist eine Schiebetüre (8) auf, die geradlinig entlang einer Seitenwand der Kabine und schräg zu dieser verschiebbar gelagert ist. Die Schiebetüre (8) ist stehend in einer Teleskop-Kugel-Linear-Führung (14) gelagert und an ihrem oberen Rand in einer im Dach (4) der Kabine vorgesehenen Führungsnut (15) geführt.

Fig. 4

Fig. 3

EP 0 504 767 A1

Die Erfindung betrifft eine Leichtbaufahrzeugkabine mit einer in einer Seitenwand angeordneten Schiebetüre.

Fahrzeuge mit Schiebetüren haben unter amderem den Vorteil, dass die Türen in geöffnetem Zustand nur unwesentlich über die Karosserie hinausragen und daher in der Regel auch bei beengten Platzverhältnissen problemlos vollständig geöffnet werden können.

Herkömmliche Fahrzeugschiebetüren sind so konzipiert, dass sich der Oeffnungsvorgang in zwei Bewegungsphasen gliedert: In der ersten Phase wird die Türe im wesentlichen senkrecht aus der Karosseriewand herausbewegt und in der zweiten Phase wird die Türe im wesentlichen parallel zur Karosseriewand verschoben. Der Schliessvorgang erfolgt umgekehrt. Dieses Konzept ist zwar bewährt, erfordert aber einen relativ komplizierten Aufhängungs- und Bewegungsmechanismus für die Türe, der für Fahrzeuge in extremer Leichtbauweise, wie zum Beispiel Leichtbau-Elektrofahrzeuge im allgemeinen oder sogenannte Solar-Fahrzeuge im speziellen, ungünstig ist.

Durch die vorliegende Erfindung soll dieses Problem behoben und eine Schiebetürenkonstruktion geschaffen werden, die sich speziell für Fahrzeuge in Ultra-Leichtbauweise eignet.

Die erfindungsgemässe Leichtbaufahrzeugkabine ist dadurch gekennzeichnet, dass die Schiebetüre geradlinig entlang der Seitenwand und schräg zu dieser verschiebbar gelagert ist.

Durch das erfindungsgemässe Schiebetürenkonzept wird einerseits die Aufhängung der Schiebetüre konstruktiv extrem vereinfacht und ist anderseits zum Oeffnen und Schliessen der Türe auch nur mehr ein einziger Bewegungsvorgang erforderlich.

Gemäss einer bevorzugten Ausführungsform der erfindungsgemässen Leichtbaufahrzeugkabine ist die Schiebetüre stehend, das heisst in ihrem unteren Randbereich, in einer Teleskop-Linear-Führung gelagert, welche im wesentlichen das ganze Gewicht der Türe trägt. Gemäss einer weiteren bevorzugten Ausführungsform ist die Schiebetüre an ihrem oberen Rand mit einem Führungssteg versehen, der in eine Führungsnut am Dach der Fahrzeugkabine eingreift und in dieser läuft, wobei Führungssteg und Führungsnut im wesentlichen keine tragende Funktion haben.

Im folgenden wird ein Ausführungsbeispiel einer erfindungsgemässen Leichtbaufahrzeugkabine anhand der Zeichnung näher erläutert. Es zeigen:

Fig. 1 eine schematische Seitenansicht eines Ausschnitts der erfindungsgemässen Leichtbaufahrzeugkabine mit geschlossener Schiebetüre,

Fig. 2 dasselbe mit geöffneter Schiebetüre,

Fig. 3 einen Schnitt durch die Fahrzeugkabine der Fig.1 nach der Linie A-A,

Fig. 4 eine vergrösserte Schnittdarstellung des Details C in Fig.3 und

Fig. 5 eine Draufsicht auf die Fahrzeugkabine in Richtung der Pfeile B in Fig. 1 bei demontierter Schiebetüre.

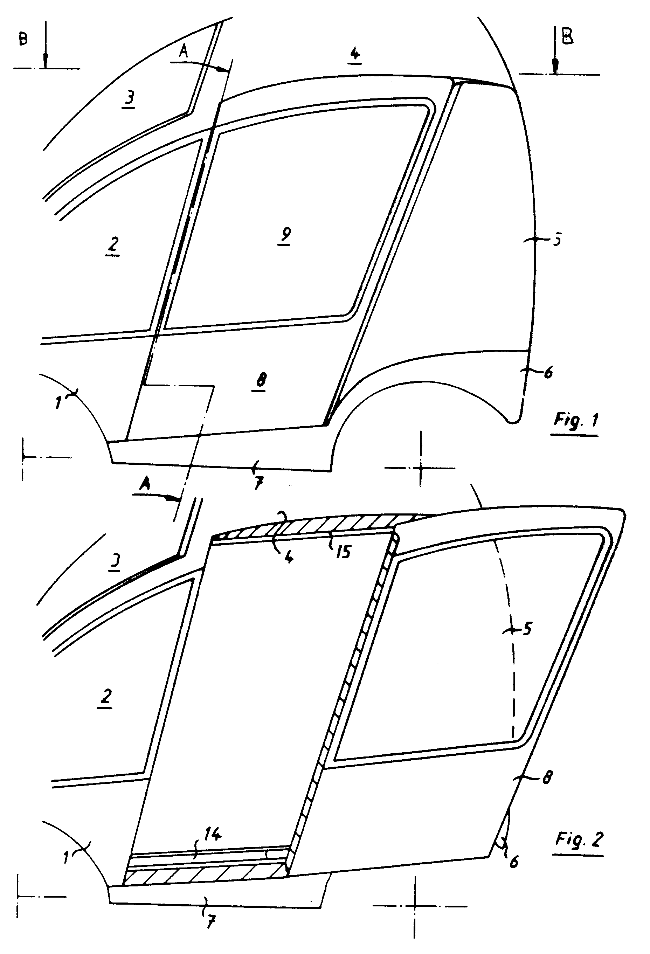

Von der in den Figuren 1 und 2 nur teilweise und schematisch dargestellten erfindungsgemässen Leichtbaufahrzeugkabine aus faserverstärktem Kunststoff sind ein vorderer Kotflügel bzw. Radkasten 1, eine Seitenscheibe 2, eine Frontscheibe 3, ein Dach 4, ein hinterer Seitenwandteil 5, ein hinterer Radkasten bzw. Kotflügel 6, ein Einstieg 7 und eine Schiebetüre 8 mit einer fest eingesetzten Scheibe 9 erkennbar. Die Seitenscheibe 2, der hintere Seitenwandteil 5, der Einstieg 7 und die beiden Radkästen bzw. Kotflügel 1 und 6 bilden zusammen die linke Seitenwand der Fahrzeugkabine. Die nicht dargestellte rechte Seitenwand ist analog aufgebaut.

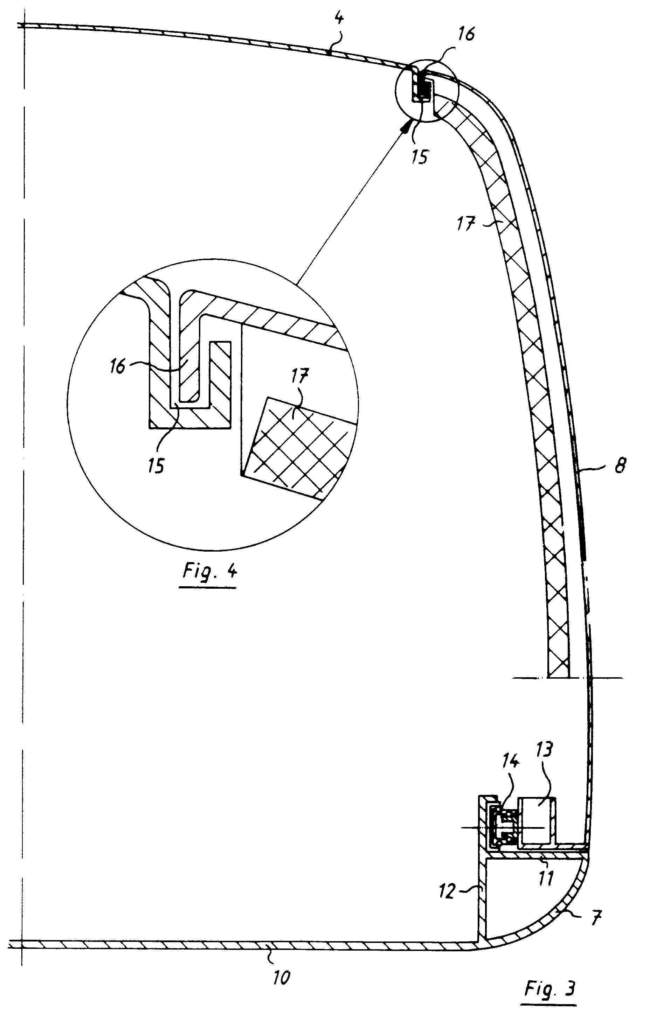

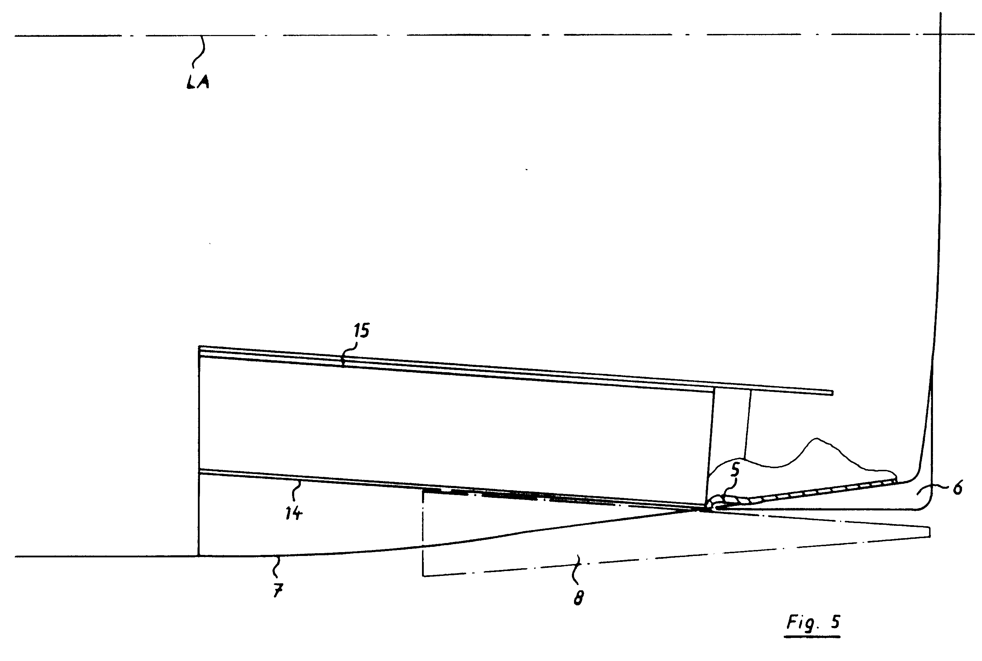

Die Aufhängung der Schiebetüre 8 geht aus dem in Fig. 3 dargestellten Schnitt durch die Fahrzeugkabine quer zur Fahrzeuglängsachse LA (Fig.5) hervor. Im Bereich des Einstiegs 7 ragt eine horizontale Platte 11 nach innen, die mit einem im wesentlichen vertikalen Tragprofil 12 verbunden ist. Letztere stützt sich auf dem Boden 10 der Fahrzeugkabine ab. Platte 11, Tragprofil 12 und Einstieg 7 bilden zusammen einen Versteifungsholm. Die Schiebetüre 8 ist an ihrem unteren Rand einwärts abgewinkelt und mit einem im Querschnitt U-förmigen Tragholm 13 versehen. An diesem ist der bewegliche Schlitten einer Teleskop-Kugel-Linear-Führung 14 befestigt, deren feststehender Teil am Tragprofil 12 montiert ist. Die Teleskop-Linear-Führung 14 trägt das gesamte Gewicht der Schiebetüre 8 und erlaubt eine geradlinige Verschiebung derselben in Richtung senkrecht zur Zeichenebene in Fig. 3.

Das Dach 4 der Fahrzeugkabine ist an seinem seitlichen Rand mit einer parallel zur Teleskop-Linear-Führung 14 verlaufenden Führungsnut oder -rinne 15 versehen. In diese greift ein am oberen Rand der Schiebetüre 8 angeordneter, vertikal nach unten abgewinkelter Führungssteg 16 ein. Der Führungssteg 16 läuft beim Verschieben der Türe 8 in der Führungsnut 15. Er dient lediglich zur seitlichen Stabilisierung der Schiebetüre 8 und hat im wesentlichen keine tragende Funktion.

Aus Fig. 5 ist ersichtlich, wie die Teleskop-Linear-Führung 14 und die Führungsnut 15 im Kabinendach 4 relativ zur Fahrzeuglängsachse LA bzw. zur Seitenwand der Fahrzeugkabine angeordnet sind. Man erkennt, dass sich die Schiebetüre 8 (strichliert angedeutet) beim Oeffnen in einer linearen Bewegung schräg nach hinten und gleichzeitig aus der Seitenwand der Fahrzeugkabine heraus am hinteren Kotflügel 6 vorbei bewegt. Die Fahrzeugkabine ist nach hinten leicht konisch zusammenlaufend. Die Bewegungsbahn der Schiebetüre 8 ist nach hinten gegenüber der Fahrzeuglängsachse LA auswärts gerichtet.

Damit die Schiebetüre 8 im geschlossenen Zustand dichtet, ist sie an ihrem vorderen und hinteren Rand mit einer Dichtleiste 17 aus eleastischem Material versehen (Fig. 3). Die Dichtleisten könnten alternativ selbstverständlich auch an den angrenzenden Bereichen der Kabinenseitenwand vorgesehen sein. Am oberen Türrand bewirkt die labyrinthartige Anordnung von Führungsnut 15 und Führungssteg 16 eine ausreichende Abdichtung.

**Patentansprüche**

1. Leichtbaufahrzeugkabine mit einer in einer Seitenwand, angeordneten Schiebetüre, dadurch gekennzeichnet, dass die Schiebetüre (8) geradlinig entlang der Seitenwand (1,2,5, 6,7) und schräg zu dieser verschiebbar gelagert ist.

2. Fahrzeugkabine nach Anspruch 1, dadurch gekennzeichnet, dass die Schiebetüre (8) stehen in ihrem unteren Randbereich in einer die Türe tragenden Teleskop-Linear-Führung (14) gelagert ist.

3. Fahrzeugkabine nach Anspruch 1 oder 2, dadurch gekennzeichnet, dass die Schiebetüre (8) an ihrem oberen Rand einen Führungssteg (16) aufweist, der in eine Führungsnut (15) am Dach (4) der Kabine eingreift und in dieser läuft, wobei Führungssteg und Führungsnut im wesentlichen keine tragende Funktion haben.

4. Fahrzeugkabine nach einem der Ansprüche 1-3, dadurch gekennzeichnet, dass die Seitenwand (1,2,5,6,7) bezüglich der Fahrzeuglängsachse (LA) von vorne nach hinten nach innen geneigt oder gekrümmt verläuft und dass die Verschiebungsbahn der Schiebetüre (8) von vorne nach hinten bezüglich der Fahrzeuglängsachse (LA) nach aussen geneigt verläuft.

EP 0 504 767 A1

Fig. 1

Fig. 2

*Fig. 4*

*Fig. 3*

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-1 218 104 (AUTOMOBILWERK EISENACH) <br> * Seite 2, linke Spalte, letzter Absatz – rechte Spalte, Zeile 29; Abbildungen * <br> --- | 1-4 | B60J5/06 <br> B62D31/00 |
| X | DE-A-1 236 352 (LUDEWIG) <br> * Spalte 3, Zeile 65 – Spalte 4, Zeile 41; Abbildungen * <br> --- | 1,2,4 | |
| A | GB-A-310 626 (TAYLOR) <br> * Abbildungen * <br> --- | 1-4 | |
| X | DE-A-2 448 462 (FORD) <br> * Spalte 2, Zeile 59 – Spalte 4, Zeile 40; Abbildungen 2,3,6 * <br> --- | 1-4 | |
| X | PLASTIQUES MODERNES ET ELASTOMERES <br> Bd. 25, Nr. 10, November 1973, <br> Seiten 78 – 79; 'UNE NOUVELLE VOITURE A CARROSSERIE THERMOFORMEE LA MINIMA' <br> --- | 1,2 | |
| A | FR-A-2 256 861 (OTFINOVSKY) <br> * Anspruch 2; Abbildungen 1,2 * <br><br> ----- | 1 | **RECHERCHIERTE SACHGEBIETE (Int. Cl.5 )** <br><br> B62D <br> B60P <br> B60J |

Der vorliegende Recherchenbericht wurde für alle Patentansprüche erstellt

| Recherchenort | Abschlußdatum der Recherche | Prüfer |
|---|---|---|
| DEN HAAG | 26 JUNI 1992 | HAGEMAN M. |